# EUROPÄISCHE PATENTSCHRIFT

(11) **EP 2 220 297 B1**
(45) Veröffentlichungstag und Bekanntmachung des Hinweises auf die Patenterteilung: **17.08.2011**
(21) Anmeldenummer: 07847213.1
(22) Anmeldetag: 19.11.2007
(51) Int. Cl.: E03C 1/04, F16L 39/02

(54) **SCHLAUCHBEFESTIGUNGSELEMENT FÜR EINE SANITÄR- ODER KÜCHENARMATUR**
HOSE FASTENING ELEMENT FOR A SANITARY OR KITCHEN FITTING
ÉLÉMENT DE FIXATION DE TUYAU SOUPLE POUR UNE ROBINETTERIE SANITAIRE OU DE CUISINE

(43) Veröffentlichungstag der Anmeldung: 25.08.2010
(73) Patentinhaber: Kludi GmbH & Co. KG, 58706 Menden (DE)
(72) Erfinder: KATZER, Dieter, 49401 Damme (DE); WIESENDAHL, Guido, 58099 Hagen (DE)
(74) Vertreter: Tarvenkorn, Oliver
(86) Internationale Anmeldenummer: PCT/EP2007/062523
(87) Internationale Veröffentlichungsnummer: WO 2009/065435

(56) Entgegenhaltungen:
- EP-A- 1 457 607
- DE-A1- 10 330 685

## Beschreibung

Die Erfindung betrifft ein Schlauchbefestigungselement für eine Mischarmatur mit wenigstens einer Ausnehmung, die wenigstens einen Zuführbereich umfasst, der sich über einen Einführkanal bis zu wenigstens einer Aufnahmeposition für einen Nippel eines Anschlussschlauchs erstreckt.

Ein solches Schlauchbefestigungselement ist aus der DE 103 30 685 A1 bekannt, die den Oberbegriff des Anspruchs 1 offenbart. Passende Anschlussleitungen, die beispielsweise als flexibler, armierter Schlauch oder als Rohr ausgebildet sind, sind endseitig mit einem Schlauchnippel versehen, welcher wenigstens einen Bund aufweist. das Schlauchbefestigungselement weist für jeden anzuschließenden Schlauch eine Ausnehmung auf, die sich vom Außenumfang des insbesondere rund ausgebildeten Schlauchbefestigungselements in dessen Inneres erstreckt, sodass der Schlauchnippel von der Seite her in das Schlauchbefestigungselement eingeschoben werden kann. In der vorgesehenen Aufnahmeposition des Schlauchs weist die Ausnehmung einen vertieften, im Umfang erweiterten Bereich auf, in den der Bund des Schlauchnippels eingesetzt werden kann, so dass er bündig mit der Oberfläche des Schlauchbefestigungselements abschließt. Der Schlauch ist damit in Zugrichtung formschlüssig festgelegt. Zudem ist seine Position damit so festgelegt, dass eine Mischereinheit für eine Sanitärarmatur mit einem kompatiblen Lochbild auf die Schlauchnippel aufgesetzt werden kann. Durch Dichtelemente, die an den Enden der Schlauchnippel und/oder den Eintrittsbohrungen des Mischerelements angeordnet sind und/oder durch zwischengelegte Dichtringe wird eine dichte, Wasser leitende Verbindung zwischen den Schläuchen bzw. Rohren und dem Mischerelement hergestellt. Durch das Einhängen der Schlauchnippel in das Schlauchbefestigungselement vor der Montage der Armatur ist eine schnelle und lagegenaue Positionierung der Schlauchnippel möglich. Ein umständliches Einschrauben in Gewindebohrungen einer Sanitär- oder Küchenarmatur kann entfallen.

Nachteilig ist an dem bekannten Schlauchbefestigungselement nur, dass die Montage vor dem Einsetzen der Einheit aus Schläuchen und Schlauchbefestigungselement vor dem Einsetzen in einen Aufnahmeraum des Armaturengrundkörpers erfolgen muss, was durch die radiale Montagerichtung bedingt ist. Ein nachträgliches Austauschen von Schläuchen erfordert demnach die vollständige Demontage der Sanitärarmatur soweit, dass das Schlauchbefestigungselement mitsamt den darin eingehängten Schläuchen frei oberhalb des Armaturenkörpers liegt und die Schläuche dann wieder radial aus den Ausnehmungen im Schlauchbefestigungselement herausgezogen werden können. Dies erfordert, dass das Schlauchbefestigungselement stets lose oder lösbar im Aufnahmeraum der Armatur angeordnet ist. Es ist insbesondere nicht möglich, das bekannte Schlauchbefestigungselement durch Einpressen, Verkleben oder dergleichen dauerhaft im Aufnahmeraum der Armatur zu befestigen oder das Schlauchbefestigungselement direkt mit an den Grundkörper der Armatur anzuformen.

Aufgabe der Erfindung ist es somit, ein Schlauchbefestigungselement anzugeben, das ein Montieren oder Demontieren von Schläuchen auch dann erlaubt, wenn das Schlauchbefestigungselement bereits an der Sanitärarmatur befestigt ist.

Diese Aufgabe wird durch ein Schlauchbefestigungselement mit den Merkmalen des Anspruchs 1 gelöst.

Als "Schlauch" im Sinne der vorliegenden Erfindungen werden alle vorkonfektionierten Anschlussleitungen verstanden, also sowohl flexible Druckschläuche wie auch starre, ggf. durch Biegen verformbare Rohrstücke, die zur Verbindung mit dem Gebäudewasserleitungsnetz vorgesehen sind und insbesondere über Eckventile daran angeschlossen werden.

Ein "Bund" am Schlauchnippel, der die formschlüssige Festlegung des Schlauchs ermöglicht, kann ringscheibenförmig sein oder auch durch eine Wulst gebildet sein.

Ein "Einführkanal" ist im Sinne der vorliegenden Erfindung eine Schiebekulisse, die beispielsweise durch eine Nut gebildet ist und eine Verschiebung eines eingeführten Schlauch- oder Rohrnippels entlang eines vorgegebenen Weges bis in eine vorgesehene Aufnahmeposition erlaubt.

Durch die besondere Geometrie der Ausnehmung in dem Schlauchbefestigungselement der Erfindung ist es möglich, einen Schlauchnippel von unten durch den Zuführbereich der Ausnehmung zu stecken, bis der Bund oberhalb der Oberfläche des Adapterelements positioniert ist, und dann eine Seitwärtsbewegung in einen der beiden Einführkanäle zu vollziehen, bis der Schlauchnippel in der vorgesehenen Aufnahmeposition angekommen ist. Dort wird der Schlauchnippel wieder soweit axial zurückgezogen, dass sein Bund in dem erweiterten Aufnahmebereich der Ausnehmung liegt und hierüber formschlüssig in der Einbaulage fixiert ist. Anschließend wird der Vorgang mit dem zweiten Schlauch wiederholt. Muss ein Schlauch ausgetauscht werden, genügt es, die Oberseite des Adapters innerhalb der Armatur freizulegen, um ein Herausheben des Bundes am Schlauchnippel aus der erweiterten Ausnehmung zu ermöglichen. Anschließend wird dann der Schlauchnippel in Richtung des Zuführbereichs verschoben, wo der Bund freikommt und ein axiales Herausziehen des Schlauches aus dem Schlauchbefestigungselement möglich ist. Dabei kann das Schlauchbefestigungselement eingebaut bleiben.

Die Einführkanäle münden erfindungsgemäß in dem gemeinsamen Zuführbereich. Bei bevorzugten Ausführungsformen, die V- oder Y- förmige Konfigurationen der Ausnehmung vorsehen, schneiden sich die Einführkanäle bzw. ihre gedachten Verlängerungen in einem gemeinsamen Punkt innerhalb des Zuführbereichs.

Möglich sind aber auch gekrümmte Ausbildungen der Einführkanäle, bei denen es keinen Schnittpunkt gibt, sondern nur die einfache Anbindung an den gemeinsamen Zuführbereich.

Das Schlauchbefestigungselement kann scheibenförmig sein, im Sinne einer einfachen Schlauchbrücke zum Einhängen der Schlauchnippel; es kann auch eine größere Höhe besitzen, um als ein Adapterelement evtl. vorhandene Höhendifferenzen innerhalb eines Aufnahmeraums zu überbrücken.

Eine weitere Lösung wird durch einen Armaturengrundkörper mit einem Schlauchbefestigungselement mit den Merkmalen des Anspruchs 6 angegeben, das in gleicher Weise wie das vorstehend als Einzelteil beschriebene Schlauchbefestigungselement ausgebildet ist.

Die Integration in den Armaturenkörper hat den Vorteil, dass die komplexe Geometrie beim Gießen des Armaturenkörpers gleich integriert werden kann, sodass eine kostengünstige Ausbildung von neuen Armaturenmodellen möglich ist, wohingegen für die Nachrüstung bestehender Modelle das separate Einzelteil gemäß Anspruch 1 gewählt werden kann.

Die Erfindung wird mit Bezug auf das in den Zeichnungen dargestellte Ausführungsbeispiel beschrieben. Die Figuren zeigen:
- Fig. 1: eine erste Ausführungsform eines Schlauchbefes- tigungselements in Draufsicht;
- Fig. 2: eine Mischeranordnung für eine Sanitärarmatur in perspektivischer Ansicht und
- Fig. 3: eine zweite Ausführungsform eines Schlauchbe- festigungselements in Draufsicht.

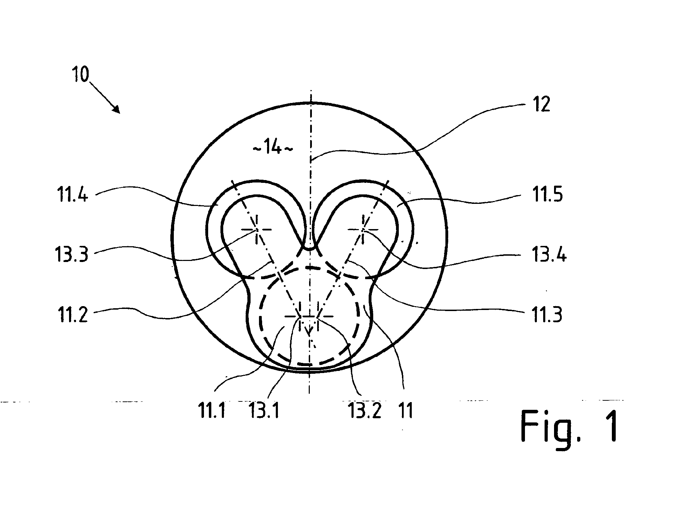

Figur 1 zeigt ein erstes Schlauchbefestigungselement 10 in Draufsicht. Das Schlauchbefestigungselement 10 ist im Wesentlichen als ein zylindrischer Körper gestaltet, der eine V-förmige Ausnehmung 11 aufweist, die sich von der Unter- zur Oberseite durchgehend erstreckt.

Die Ausnehmung 11 ist im dargestellten Ausführungsbeispiel so weit im Inneren des Körpers angeordnet, dass sich am Außenmantel ein geschlossener Ringkörper ergibt. Möglich wäre jedoch auch, die Ausnehmung bis zur Außenseite durchlaufen zu lassen.

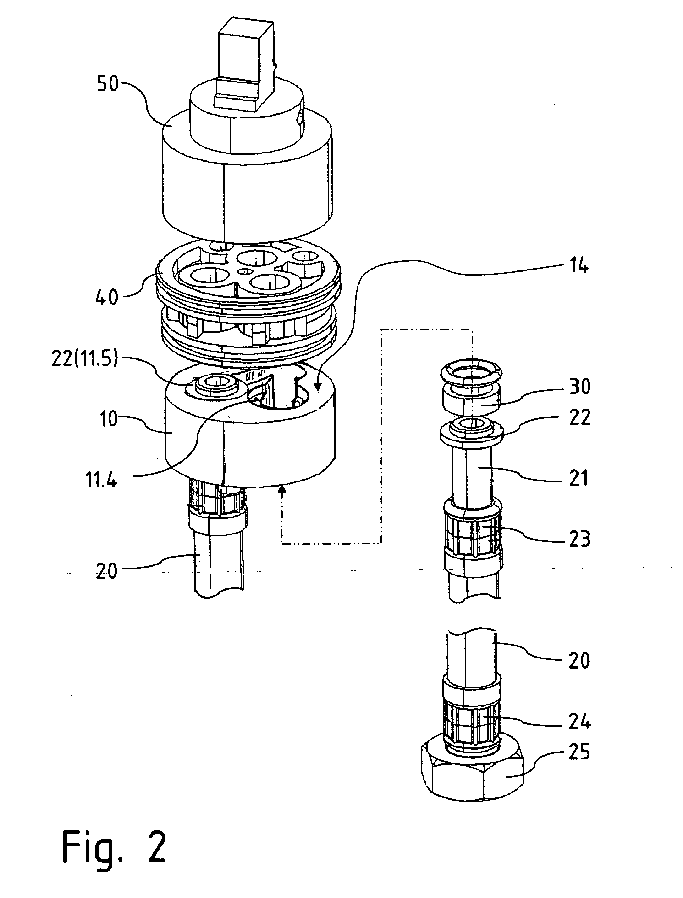

Die Ausnehmung 11 besitzt eine V-förmige Kontur. An den Aufnahmepositionen, die durch Mittelpunkte 13.3, 13.4 gekennzeichnet sind, ist jeweils eine Senkung 11.4, 11.5 vorhanden, die es erlaubt, einen ringförmigen Bund 22 eines Schlauchnippels 21 (siehe Fig. 2) aufzunehmen, so dass dieser bündig mit einer Oberfläche 14 des Schlauchbefestigungselements 10 abschließt und formschlüssig darin festgelegt ist.

Von den Aufnahmepositionen 13.3, 13.4 gehen Nuten als Führungskanäle 11.2, 11.3 aus, die in einem Winkel derart zueinander angestellt sind, dass Sie sich in einem gemeinsamen Zuführbereich 11.1 vereinigen. Im Zuführbereich 11.1 ist ein Innkreisdurchmesser gegeben, der mindestens dem Durchmesser des Bundes 22 am Schlauchnippel 21 entspricht.

Im dargestellten Ausführungsbeispiel ist der Zuführbereich 11.1 nicht exakt rund, sondern langlochförmig ausgebildet, wobei die beiden Zentren des Langloches mit 13.1, 13.2 markiert sind. Bei Aufnahmepositionen, die nah zueinander wie auch nah zu dem Zuführbereich 11.1 liegen, kann der Bund 22 des zuerst eingesetzten Schlauchnippels 21 bis in den Zuführbereich 11.1 hinein ragen, wie durch die beiden gestrichelten Bögen angedeutet ist, welche eine gedachte Fortsetzung der Senkungen 11.4, 11.5 bilden. Der Außenumfang des durch den Zuführbereich 11.1 einzuführenden zweiten Schlauchnippels ist durch den gestrichelt gezeichneten Vollkreis angedeutet.

Das dargestellte Ausführungsbeispiel eines Leitungsanschlussadapters 10 ist spiegelsymmetrisch in Bezug auf eine Spiegelachse 12 aufgebaut. Die Einführkanäle 11.2, 11.3, die das seitliche Verschieben eines Schlauchnippels in die Aufnahmepositionen 13.3, 13.4 erlauben, erstrecken sich bei der gezeigten V-förmigen Konfiguration linear zwischen den Zentren 13.1, 13.3 und 13.2, 13.4.

Fig. 2 zeigt in einer perspektivischen Explosionsdarstellung die Einbausituation zweier Anschlussschläuche 20 an dem Schlauchbefestigungselement 10.

Ein erster, links dargestellter Schlauch 20 ist bereits in das Schlauchbefestigungselement 10 eingehängt, wobei der Bund 22 am Ende des Schlauchnippels 21 in den gegenüber der Oberfläche 14 vertieften Aufnahmebereich 11.4 in das Schlauchbefestigungselement 10 eingesenkt ist.

Der in Fig. 2 rechts dargestellte Anschlussschlauch 20 kann, wie durch den Pfeil angedeutet, von unten in den Zuführbereich 11.1 geschoben werden und wird dann entlang der Nut 11.2 im Schlauchbefestigungselement 10 verschoben, bis die Aufnahmeposition erreicht ist, wo der Bund 22 in der Vertiefung 11.4 aufgenommen wird.

Die Länge des Schlauchnippels 21 zwischen dem endseitigen Bund 22 und einer Quetschverbindung 23 zum eigentlichen Schlauchabschnitt ist mit der Höhe des Adapters 10 so abgestimmt, dass der Bund 22 beim Einsetzen des Schlauches 20 zumindest bis kurz über die Oberfläche 14 des Adapters 10 ragen kann.

Dichtungs- und Distanzelemente 30 können bereits vormontiert oder an den Bund 22 angeformt werden, sodass sie zusammen mit dem Schlauchnippel 21 in die vorgesehene Position am Schlauchbefestigungselement 10 gebracht werden. Eine Mischerkartusche 50 wird dann direkt oder indirekt über eine Verbindungseinheit 40 von oben auf die Einheit aus Schlauchbefestigungselement 10 und montierten Schläuchen 20 gesetzt. Werden alle Elemente 10, 20, 30, 40, 50 axial aneinander gepresst, so wird eine dichte Überleitung des über die Schläuche 20 herbeigeführten Kalt- und Warmwassers zu der Mischerkartusche 50 bewirkt.

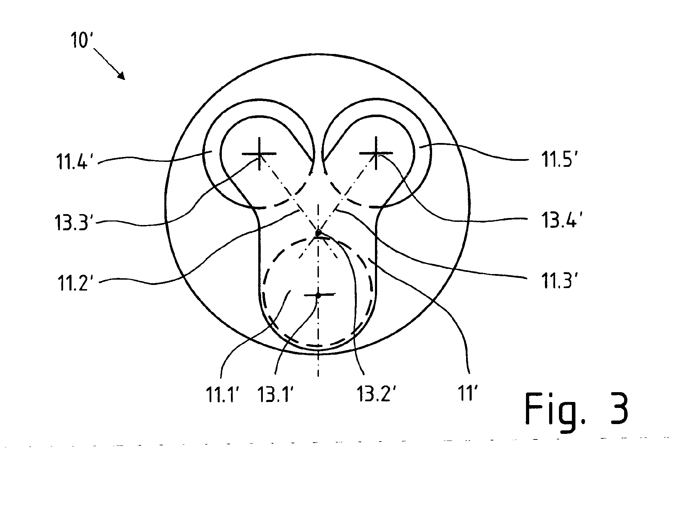

Fig. 3 zeigt eine zweite Ausführungsform eines Schlauchbefestigungselements 10', dessen Ausnehmung 11 eine Y-förmige Konfiguration besitzt. Bei gleichem Abstand der Aufnahmepositionen 13.3, 13.4 ist der von den Einführkanälen 11.2', 11.3' eingeschlossene Winkel etwas größer und auch der Abstand zum unteren Zentrum 13.1 des Durchführungsbereichs 11.1' größer. Die Mittellinien der Einführkanäle 11.2', 11.3' treffen sich in einem Punkt 13.2', von dem aus sich der Zuführbereich 11.1' für die Durchführung des Schlauchendes langlochförmig nach unten erstreckt.

## Patentansprüche

1. Schlauchbefestigungselement (10; 10') für eine Sanitär- oder Küchenarmatur,
mit wenigstens zwei Einführkanälen (11.2, 11.3; 11.2', 11.'3), die sich jeweils bis zu wenigstens einer Aufnahmeposition (13.3, 13.4; 13.3', 13.4') erstrecken, an der ein Bund (22) eines Schlauchnippels (21) an einem Anschlussschlauch (20) axial festlegbar ist,
**dadurch gekennzeichnet, dass** das Schlauchbefestigungselement eine innen liegende Ausnehmung (11, 11') aufweist, die aus einem Zuführbereich (11.1; 11.1') und den Einführkanälen (11.2, 11.3; 11.2', 11.3') gebildet ist, wobei die Einführkanäle in einem Winkel zueinander angestellt sind und in dem gemeinsamem Zuführbereich (11.1, 11.1') münden.

2. Schlauchbefestigungselement (10; 10') nach Anspruch 1, **dadurch gekennzeichnet, dass** die Einführkanäle (11.2, 11.3; 11.2', 11.3') sich in dem Zuführbereich (11.1, 11.1') schneiden.

3. Schlauchbefestigungselement (10) nach Anspruch 1 oder 2, **dadurch gekennzeichnet, dass** die Ausnehmung (11) V-förmig ist.

4. Schlauchbefestigungselement (10') nach Anspruch 1 oder 2, **dadurch gekennzeichnet, dass** die Ausnehmung (11') Y-förmig ist.

5. Schlauchbefestigungselement (10; 10') nach einem der Ansprüche 1 bis 4, **dadurch gekennzeichnet, dass** jeweils an der Aufnahmeposition jedes Einführkanals (11.2, 11.3; 11.2', 11.3') eine gegenüber einer Oberseite (14) des Schlauchbefestigungselements (10) vertiefte und im Umfang erweiterter Aufnahmebereich (11.4, 11.5) zur Aufnahme eines Bundes (22) an einem Schlauch (20) ausgebildet ist.

6. Armaturengrundkörper mit einem inneren Aufnahmeraum, in dem ein Schlauchbefestigungselement nach einem der vorgehenden Ansprüche angeordnet ist.

7. Armaturengrundkörper nach Anspruch 7, **dadurch gekennzeichnet, dass** am Innenumfang wenigstens ein Absatz oder Vorsprung ausgebildet ist, auf den das Schlauchbefestigungselement aufsetzbar ist.

8. Armaturengrundkörper nach Anspruch 7, **dadurch gekennzeichnet, dass** das Schlauchbefestigungselement einteilig mit dem Armaturengrundkörper ausgebildet ist und den Aufnahmeraum in der Höhe unterteilt.

## Claims

1. A hose fastening element (10; 10') for a sanitary or kitchen fitting, with at least two insertion channels (11.2, 11.3; 11.2', 11.'3) which extend in each case as far as at least one receiving position (13.3, 13.4; 13.3', 13.4') on which a collar (22) of a hose nipple (21) is capable of being fixed axially to an attachment hose (20), **characterized in that** the hose fastening element has a recess (11, 11') which is situated on the inside and which is formed from a supply region (11.1, 11.1') and the insertion channels (11.2, 11.3; 11.2', 11.3'), wherein the insertion channels are set at an angle to one another and open into a common supply region (11.1, 11.1').

2. A hose fastening element (10; 10') according to claim 1, **characterized in that** the insertion channels (11.2, 11.3; 11.2', 11.3') intersect in the supply region (11.1, 11.1').

3. A hose fastening element (10) according to claim 1 or 2, **characterized in that** the recess (11) is V-shaped.

4. A hose fastening element (10') according to claim 1 or 2, **characterized in that** the recess (11') is Y-shaped.

5. A hose fastening element (10; 10') according to any one of claims 1 to 4, **characterized in that** a receiving region (11.4, 11.5) recessed with respect to a top side (14) of the hose fastening element (10) and enlarged in its periphery is formed in each case on the receiving position of each insertion channel (11.2, 11.3; 11.2', 11.3') in order to receive a collar (22) on a hose (20).

6. A fitting base body with an inner receiving space, in which a hose fastening element according to any one of the preceding claims is arranged.

7. A fitting base body according to claim 7, **characterized in that** at least one offset or projection, on which the hose fastening element is capable of being set, is formed on the external periphery.

8. A fitting base body according to claim 7, **characterized in that** the hose fastening element is formed in one piece with the fitting base body, and it divides the receiving space vertically.

## Revendications

1. Elément de fixation de tuyau souple (10 ; 10') pour une robinetterie sanitaire ou de cuisine,
comprenant au moins deux canaux d'introduction (11.2, 11.3 ; 11.2', 11.3') qui s'étendent chacun jusqu'à au moins une position de réception (13.3, 13.4 ; 13.3' ; 13.4'), sur laquelle un collet (22) d'un raccord de tuyau souple (21) peut être fixé dans le sens axial sur un tuyau de raccordement (20),
**caractérisé en ce que** l'élément de fixation de tuyau souple présente un évidement intérieur (11, 11') constitué d'une zone d'amenée (11.1 ; 11.1') et de canaux d'introduction (11.2, 11.3 ; 11.2', 11.3'), sachant que les canaux d'introduction sont mis en place dans un angle les uns par rapport aux autres et débouchent dans la zone d'amenée commune (11.1, 11.1').

2. Elément de fixation de tuyau souple (10 ; 10') selon la revendication 1, **caractérisé en ce que** les canaux d'introduction (11.2, 11.3 ; 11.2', 11.3') se coupent dans la zone d'amenée (11.1, 11.1').

3. Elément de fixation de tuyau souple (10) selon la revendication 1 ou 2, **caractérisé en ce que** l'évidement (11) est en forme de V.

4. Elément de fixation de tuyau souple (10') selon la revendication 1 ou 2, **caractérisé en ce que** l'évidement (11') est en forme de Y.

5. Elément de fixation de tuyau souple (10 ; 10') selon l'une quelconque des revendications 1 à 4, **caractérisé en ce qu'**une zone de réception (11.4, 11.5) évidée par rapport à un côté supérieur (14) de l'élément de fixation de tuyau souple (10) et élargie sur la périphérie pour la réception d'un collet (22) sur un tuyau (20) est réalisée respectivement sur la position de réception de chaque canal d'introduction (11.2, 11.3 ; 11.2', 11.3').

6. Corps de base de robinetterie avec un espace de réception intérieur contenant un élément de fixation de tuyau souple selon l'une quelconque des revendications précédentes.

7. Corps de base de robinetterie selon la revendication 7, **caractérisé en ce qu'**au moins un épaulement ou une saillie, sur laquelle peut être placé l'élément de fixation de tuyau souple, est réalisée sur la périphérie intérieure.

8. Corps de base de robinetterie selon la revendication 7, **caractérisé en ce que** l'élément de fixation de tuyau est réalisé d'un seul tenant avec le corps de base de robinetterie et divise l'espace de réception en hauteur.
